(19) **Europäisches Patentamt / European Patent Office / Office européen des brevets**

(11) **EP 4 786 920 A1**

(12) **EUROPEAN PATENT APPLICATION**

(43) Date of publication:
05.08.2026   Bulletin 2026/32

(21) Application number: 25209965.0

(22) Date of filing: 21.10.2025

(51) International Patent Classification (IPC):
*G01B 21/08* (2006.01)      *G01N 21/3563* (2014.01)
*G01N 25/72* (2006.01)

(52) Cooperative Patent Classification (CPC):
**G01B 21/085; G01N 21/3563; G01N 25/72**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.12.2024 EP 24221970**

(71) Applicant: **coatmaster AG**
**8404 Winterthur (CH)**

(72) Inventors:
• **Hauri, Samuel**
  **8404 Winterthur (CH)**
• **Lengweiler, Oliver Alexander**
  **8404 Winterthur (CH)**
• **Reinke, Nils André**
  **8404 Winterthur (CH)**
• **Bariska, Andor**
  **8404 Winterthur (CH)**

(74) Representative: **E. Blum & Co. AG**
**Franklinturm**
**Hofwiesenstrasse 349**
**8050 Zürich (CH)**

Remarks:
Claims 16 - 22 are deemed to be abandoned due to non-payment of the claims fees (Rule 45(3) EPC).

(54) **METHOD FOR THE CONTACTLESS AND NON-DESTRUCTIVE MEASUREMENT OF A COATED SURFACE AND DEVICE THEREFOR**

(57)     A device for the contactless and non-destructive testing of a surface by measuring infrared radiation thereof in response to thermal excitation comprises one or more electromagnetic radiation sources (220), each adapted to emit excitation radiation directed onto the surface (17) to be tested. One or more detectors (120) with pixel arrays (121) are directed towards the surface (17) and record the response to the excitation radiation as a function of time. A control unit (60) receives the values from the pixels and determines the times at which the values were measured, taking into account the non-gated measurement at the pixel arrays (121). Control unit (60) also controls the pulsing of the one or more radiation sources (220).

**FIG. 3**

EP 4 786 920 A1

## Description

### Technical Field

The present invention relates to a method for measuring a parameter of the surface of an object in contactless and non-destructive manner. The method also relates to a device for performing such a method.

### Background

The contactless testing of surfaces based on the generation and measurement of transient periodic heating and cooling processes uses an excitation source for heating the surface to be tested as well as an infrared detector that measures the infrared radiation from the heated surface. This method is called photothermal testing or photothermal radiometry if electromagnetic radiation in the ultraviolet, optical or infrared range is used for excitation.

One important parameter that can be measured by such methods is the thickness of the coating arranged on a surface.

US 2006/0096677 is related to different temperature measurement and heat-treating methods and systems, especially to measuring heating results on disc shaped wafers from both sides wherein a plurality of electromagnetic radiation sources is provided above and below the wafer.

A further device is described in US 2013/0037720. It uses one or more incoherent electromagnetic radiation sources, a detector arranged on a detection axis and comprising a measuring area, a testing area defining an area of the test surface to be measured, and an imaging device arranged on the detection axis for mapping the testing area onto the measuring area of the detector. The radiation sources are adapted to generate a pulse-like or intensity modulated excitation radiation, e.g., flashlights directed onto the surface to be tested in the testing area.

US2019/0318444A1 describes a method where the temperature decay of a coating is measured by means of a pixel-based detector. Here, the coating is moved past a radiation source and the detector. The travel time between the location of irradiation and the location of detection is used to record temperature values at different times after the irradiation.

### Summary of the Invention

In some aspects, it is an object to improve the measurement quality of a parameter of a surface, in particular of the measurement quality of the thickness of a coating located on the surface, by measuring an infrared radiation thereof.

This object is achieved by the method of claim 1.

Accordingly, the method comprises at least the following:

- Emitting, at radiation times $t_p$, radiation pulses by means of at least one electromagnetic radiation source and directing them onto the surface to be measured. Such radiation pulses temporarily heat the surface. The radiation pulses may be emitted in a beam along an associated radiation axis. The radiation pulses are generated at radiation times $t_p$, with n being an index of the pulses.
- Receiving detection radiation emitted by the surface in response to the radiation pulses by means of at least one detector, wherein the detector comprises a plurality of pixels. The detection radiation typically depends on the temperature of the surface.
- Reading out values $v_{i,j,k}$ of the pixels of the detector in a series of consecutive frames k. These values represent signals from the pixels at times $t_{i,j,k}$, i.e. they represent the state, such as the thermal state, of the pixel at the time $t_{i,j,k}$. The times $t_{i,j,k}$ depend on the time $t_k$ of the respective frame k as well as on the position i,j of the pixel in the detector. In other words, the times $t_{i,j,k}$ are a non-constant function of the pixel position i,j.
- Determining, by means of a control unit, the times $t_{i,j,k}$ from the position i,j and the time $t_k$ of the frame k. In other words, the position i,j as well as the times $t_k$ are used for determining the times $t_{i,j,k}$.
- Determining, by means of the control unit, said parameter using the values $v_{i,j,k}$ and their times $t_{i,j,k}$.

In other words, the method takes into account that the read-out pixel signal values $v_{i,j,k}$ represent the pixel signals at times $t_{i,j,k}$ that not only depend on the time $t_k$ of the frame k but also on the position i,j of the pixel within the detector.

This takes into account that in many pixel-based detectors, in particular in pixel-based infrared detectors, the read-out is not "gated" over all pixels at the time $t_k$ of the frame, i.e., the signal values do not represent the pixel values at a common time for all pixels. Rather, the value of at least some of the different pixels are measured at different times. Hence, the method attributes more precise times to the measured values, which in turn allows to analyze the time series of values $v_{i,j,k}$ more precisely.

The method is particularly useful if the detector is bolometric detector where the values $v_{i,j,.}$ describe the temperatures of the pixels at the times $t_{i,j,k}$, e.g., a microbolometer. In such detectors, the values are typically not gated or at least not gated over the whole pixel array, i.e., the values $v_{i,j,k}$ represent the pixel temperature (and therefore the surface temperature) at different times $t_{i,j,k}$.

For photothermal radiometry, advantageously the detector is adapted to detect wavelengths larger than 1 $\mu$m, e.g., between 1 $\mu$m and 25 $\mu$m. For example, a microbolometer will be adapted to detect wavelengths between 4 $\mu$m and 20 $\mu$m, in particular between 8 $\mu$m and 12 $\mu$m.

To simplify assessing how the surface reacts to a given radiation pulse n at radiation time $t_p$, the decay of the values $v_{i,j,k}$ over the time relative to $t_p$ may be analyzed. To do so, analysis can be performed over several frames k as a function of the relative times between the times $t_{i,j,k}$ and the radiation time $t_p$. Hence, in the method may comprise:

- determining, for a given radiation pulse at the radiation time $t_p$, the time offsets $t'_{i,j,k} = t_{i,j,k} - t_p$ for several frames k between the given radiation pulse and a next radiation pulse, and
- determining the parameter from a decay of the values $v_{i,j,k}$ as a function of the time offsets $t'_{i,j,k}$.

Many suitable detectors generate, for a given frame k, data packets comprising the values $v_{i,j,k}$ of the pixels of the detector. These data packets can also indicate the time $t_k$ of the frame k. This time may, e.g., be derivable from the time the data packet is transmitted to the control unit, or it may be encoded as a time value in the data packet (e.g., based on a shared time reference of the control unit and the detector).

Processing the values $v_{i,j,k}$ is easier if the frames are synchronized with the excitation pulses. Hence, in some embodiments, the method may comprise at least the following:

- receiving, by the control unit, for each frame k, at least one data packet comprising the values $v_{i,j,k}$ and being indicative of the time $t_k$ of at least one frame k,
- determining, by the control unit, the radiation time $t_p$ for a later excitation pulse as a function of the time $t_k$ of one or more of the received data packets.

To further ease data analysis, the radiation times $t_p$ of the pulses should be determined such that the for the later radiation pulse is timed to lie between two consecutive frames k1 and k2. Hence, the control unit may determine the radiation time $t_p$ of the "later" excitation pulse to lie between the frame periods of two consecutive frames k1 and k2. The "frame periods" are defined as follows: each frame period extends between the smallest and the largest of the times $t_{i,j,k}$ for all pixels i,j and for k = k1 or k = k2.

For example, the radiation time $t_p$ of the later excitation pulse may determined from the time $t_k$ derived from the data packet of at least one preceding frame k, which allows the system to adapt itself to the times of the frames. This is particularly useful if the detector is in a "free running" mode, i.e., its frames are not externally synchronized.

The time $t_k$ of a frame k may be determined by the control unit from the time of arrival of the data packet containing the values $v_{ijk}$. However, in order to account for signal delays from the measuring head to the control unit, the control unit may add a non-zero offset $O_t$ to it.

The method may also be used to process the values of two frames k' and k" recorded from different first and second positions in respect to the surface, e.g., from different positions of the same detector in respect to the surface or from different positions, in respect to the surface, of two different detectors. In this case, the method may comprise at least the following:

- receiving, by the control unit, the values $v_{i',j',k'}$ of a first frame k' and the values $v_{i'',j'',k''}$ of a second frame k", with the first and second frames being recorded from different first and second positions

  a) by the same detector moved between the different positions, or
  b) by two different detectors located at the different positions, and

- determining, by the control unit, pairs of pixels $P_{I',j'}$ and $P_{I'',j''}$ in the first frame k' and in the second frame k" receiving the detection radiation from the same spots of the surface.

The determination of such pairs of pixels allows to identify pixels that receive light from the same point of the surface while viewing said point from different directions. Measurement results derived from the pair of pixels therefore be used to gain a better understanding of the parameter at said point, e.g., to calculate a more accurate version of the parameter.

In this case, the method may comprise

- receiving, by the control units, the values $v_{i',j',k'}$ of several first frames k' recorded from the first position and the values

$v_{i'',j'',k''}$ of several second frames k' recorded from the second position,
- determining, by means of the control unit,

a) a first estimate of the parameter using the values $v_{i',j',k'}$ and their times $t_{i',j',k'}$ of a pixel $P_{i',j'}$ in the first frames and
b) a second estimate of the parameter using the values $v_{i'',j'',k}$ and their times $t_{i'',j'',k}$ of a pixel $P_{i'',j''}$ in the second frame, with the pixels $P_{i',j'}$ and $P_{i'',j''}$ being a pair receiving the detection radiation from the same spots of the surface,

- combining, by means of the control unit, the first and second estimate of the parameter for obtaining a combined parameter.

This is based on the understanding that more accurate estimates may result when first processing only the values from the first frame and then only the values of the second frame in order to obtain first and second estimates. Only then, the two estimates are combined.

As mentioned, the first frame(s) k' and the second frame(s) k" may be recorded by means of two different detectors, which can be located at different positions in respect to the surface.

Alternatively, the first frame(s) k' and the second frame(s) k" may be recorded by the same detector. In this case, the method comprises moving the detector, in respect to the surface, from the first to the second position between recording the first frame(s) k' and the second frame(s) k". In this context "moving the detector, in respect to the surface", denotes a relative movement, which may be achieved by moving the detector and/or by moving the surface in order to change the relative position between the two.

In another aspect, summarized in the following, it is an object to improve the measurement of coating thicknesses, or other parameters, of different objects. In some embodiments, it is an object to detect the coating thickness or another parameter of specific features of coated objects as edges, cavities in the object and corners.

In this aspect, a method for the contactless and non-destructive measurement of a surface by measuring its infrared radiation thereof, may comprise the following steps:

At least one electromagnetic radiation source is provided. The radiation source is adapted to emit excitation radiation in an excitation beam along an associated radiation axis which can be directed onto the surface to be measured. The number of electromagnetic radiation sources depends on the surface to be measured, especially if the object with the surface is a 3D object where surfaces with different orientations are to be measured.

At least one detector is provided and positioned at a measurement position arranged on a detection axis directed towards the surface to be measured. In response to radiation impinging onto the surface to be measured emitted from the electromagnetic radiation source(s), the detector receives detection radiation emitted by the surface to be measured. The detector(s) comprise a plurality of pixels.

A control unit is provided and connected to the at least one detector and the electromagnetic radiation source(s).

The method defines at least two measurement positions in which a detector receives radiation from the surface to be measured after emission of radiation by the electromagnetic radiation source(s). It is possible that there are different detectors at these measurement positions, or the detector is moved between the measurement positions or the object to be measured is moved to be positioned such that a detector is at such a measurement position.

The control unit may synchronize the radiation signals received from the at least two measurement positions for a predetermined pixel of the detector for each of the at least two measurement positions by applying a time shift based on the starting time of the detected radiation signals vis-à-vis emission of radiation by the electromagnetic radiation source to a common point in time.

If all measurement positions are occupied by a separate detector, then all radiation responses from the surface may be detected with one measurement in one positioning step. If only one detector is provided, then all radiation responses from the surface are to be detected in a number of measurements in positioning steps equal to the number of measurement positions. If a limited number of detectors is provided, then it may take a reduced number of measurements in a reduced number of positioning steps, e.g., four detectors at four corners of an object to be measured necessitate two measurements, a first one with four corners and a second one with the remaining four corners.

In the case of more than one measurement, i.e., several positioning steps, the radiation signals may be transmitted to the control unit together with time information from the electromagnetic radiation source(s) related to the emission of radiation in each of the positioning steps.

In some embodiments, the control unit synchronizes radiation signals received from the plurality of pixels of each of the detectors by applying a time shift based on the starting time of the detected radiation signals to a common point in time for this detector, which can be the first pixel in the first column and row or it can be a different pixel, especially vis-à-vis the predetermined pixel from the inter-detector synchronization.

In a further aspect, a device for the contactless and non-destructive measurement of a surface by measuring its infrared radiation thereof, may comprise: one or more electromagnetic radiation sources, each adapted to emit excitation radiation in an excitation beam along an associated radiation axis which can be directed onto the surface to be measured; one or more detectors at one or more respective measurement positions arranged on a detection axis directed towards the surface to be measured and, in response to radiation impinging onto the surface to be measured emitted from the electromagnetic radiation source(s), receiving detection radiation emitted by the surface to be measured; and a control unit connected to the detectors and the electromagnetic radiation sources, wherein each of the at least one detector comprises a plurality of pixels. The control unit is configured to position the at least one detector in at least two measurement positions in which a detector is positioned to receive radiation from the surface to be measured after emission of radiation by the electromagnetic radiation source(s), in that the control unit is configured to synchronize the radiation signals received from the at least two measurement positions for a predetermined pixel of the detector for each of the at least two measurement positions by applying a time shift based on the starting time of the detected radiation signals vis-à-vis emission of radiation by the electromagnetic radiation source to a common point in time.

In some embodiments, the control unit may be configured to synchronize, for each of the detectors separately, radiation signals received from the plurality of pixels $P_{ij}$ of this detector by applying a time shift based on the starting time of the detected radiation signals to a common point in time for all pixels $P_{ij}$. These features are able to stand alone and only in connection with a device for the contactless and non-destructive measurement of a surface by measuring its infrared radiation thereof according to the preamble of claim 18.

When the features are realized within a device according to claim 19, then this synchronization may specifically apply vis-à-vis the predetermined pixel from the inter-detector synchronization.

A plurality of detectors and/or electromagnetic radiation sources may be positioned at predetermined distances at the corners, at the edges, or over a continuous surface of a coated object along the detection axis. The detectors and electromagnetic radiation sources may be combined into measurement heads.

The observation cones of the detector(s) that are located at two adjacent measurement positions may overlap in an area where a surface to be measured can be positioned. This allows for an improved measurement of areas that are at a certain distance from the detector and have therefore a lower resolution.

The radiation sources may be located concentrically to the detection axis of an associated detector.

A device may comprise a predetermined number of detectors configured to be positioned around an object to be measured, with the observation cones of the detectors oriented in a way that the entire surface of interest of the coated object is in the field of view of at least one of the observation cones. The surface of interest can be the entire surface of an object or a part of it, which may, e.g., be an area to be checked for quality of coating.

The predetermined number of detectors is one or more detectors, and they may be positioned in a sequence of separate image taking events (i.e., frame taking events) around the object to be measured to cover, after all image taking events, the entire interesting surface of the object. In between two image taking events, one or more detectors are moved (7) and/or rotated in respect to the object to be measured.

The predetermined number of detectors may be one or more detectors, and in between two image taking events, the object is moved and/or rotated to position the object in respect to the one or more detectors to achieve positioning of the observation cones. After all image taking events have taken place, the entire interesting surface of the coated object was at least once in the field of view of at least one of the observation cones.

Such a device can comprise a plurality of detectors and/or electromagnetic radiation sources, positioned at a predetermined distance at the corners, at the edges and / or over a continuous surface of a coated object along the detection axis.

The observation cones of two adjacent detectors or the observation cones of one moved detector between two of its subsequent positions or the observation cone of one detector between two subsequent positions of a moved and/or rotated object may overlap in an area of the surface of the object. Such an overlapping area that can be measured by more than one detector allows for an improved measurement.

Within a further embodiment of the device, the radiation sources may be located concentrically to the detection axis of an associated detector.

The device may comprise a predetermined number of detectors configured to be positioned around an object having a surface to be measured, with the observation cones of the detectors oriented in a way that the entire surface of interest of the coated object is in the field of view of at least one of the observation cones. Such a surface of interest can be only part of the total surface of the object. If the entire surface of the coated object is covered, then this is called a solid angle of $4\pi$.

Such a complete coverage may be achieved when there is only one or more detectors and the one or more detectors are positioned in a sequence of separate image taking events around the object to be measured to cover, after all image taking events, the entire interesting surface of the object, and wherein in between two image taking events, one or more detectors are moved and/or rotated in respect to the object to be measured. This approach reduces the number of necessary detectors at the cost of subsequent image events which means that the measurement is slower and that the lighting conditions with a flashlight have to be defined to ensure that a lighting level above a threshold of illumination is achieved generating a sufficient irradiation response.

A further $4\pi$ approach applies the predetermined number of detectors of one or more detectors, when between two image taking events, the object is moved and/or rotated to position the object in respect to the one or more detectors to achieve positioning of the observation cones with the proviso that, after all image taking events have taken place, the entire interesting surface of the coated object was at least once in the field of view of at least one of the observation cones. Instead of moving the detectors, it is also possible to move and rotate the coated object to be measured.

For all $4\pi$ approaches, since the detectors comprise a plurality of pixels, the control unit may be configured to synchronize radiation signals received from the plurality of pixels from different detectors by applying a time shift based on the starting time of the detected radiation signals to a common point in time.

In all aspects, a thickness map may be provided as result of the measurement. The thickness map shows the thickness at the surfaces of interest of the object in a spatially resolved manner. Such a thickness map allows for a quick visual check of the quality of a coating measured with the method and a device according to an embodiment. Additionally, such visual representations allow the person skilled in the art to detect anomalies in coating and to amend coating parameters to achieve a better result for subsequent coatings.

The above method may be carried out by a control unit programmed to perform it.

The invention also relates to a device adapted to carry out the method, in particular to a device comprising at least the following elements:

- A radiation source structured to emit pulsed excitation radiation onto the surface to be measured.
- A detector positioned to detect radiation emitted by the surface in response to the excitation radiation, with the detector comprising a plurality of pixels.
- A control unit structured and programmed to perform the method.

Further embodiments of the invention are laid down in the dependent claims.

## Brief Description of the Drawings

Preferred embodiments of the invention are described in the following with reference to the drawings, which are for the purpose of illustrating the present preferred embodiments of the invention and not for the purpose of limiting the same. In the drawings.

Fig. 1    shows a schematic perspective view of a plurality of measurement heads with a coated object in the shape of a parallelepiped;

Fig. 2    shows a schematic perspective view of a plurality of measurement heads with a coated object in the shape of a cylinder;

Fig. 3    shows a diagram of measured radiation values over time for a plurality of pixels of a measurement head;

Fig. 4    shows a schema of an array of pixels of a measurement head and related measured values and related time stamps;

Fig. 5    shows a schematic perspective view of a plurality of measurement heads with a coated object in the shape of a sphere;

Fig. 6    shows a very schematical detail view of a cross-section of an object with measurement heads, the indication of surface areas of pixels of the measurement heads and the indication of the measured thickness of the coating for these measurement heads;

Fig. 7    shows a further embodiment of the device for the contactless and non-destructive testing of a surface with an arrangement of less measurement heads and reorientation of the measurement heads and/or object;

Fig. 8    shows two diagrams of measured radiation values over time for a plurality of pixels at two measurement positions;

Fig. 9    shows an object to be measured with four measurement heads at four measurement positions;

Fig. 10   shows an object to be measured with one measurement head at a specific measurement position, indicating a rotation of the object to move the measurement head to a specific further measurement position;

Fig. 11   shows a schematic embodiment of a device;

Fig. 12   illustrates examples of some timing aspects; and

Fig. 13   illustrates some steps of a method for operating the device.

## Description of Some Embodiments

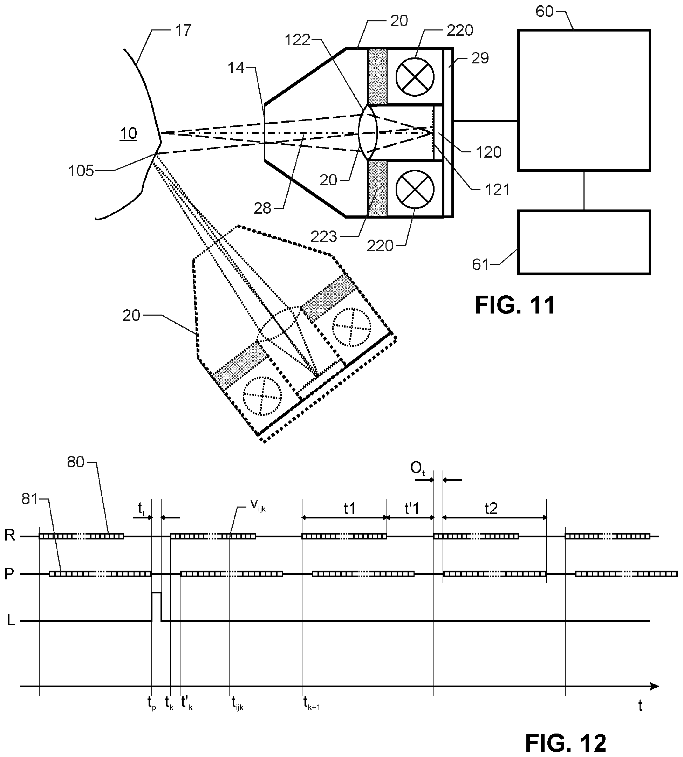

Fig. 11 shows a schematic diagram of a device having one or more camera-type measurement heads 20 for investigating the surface 17 of an object 10.

Each measurement head 20 (also called "IR sensor" in the following) comprises a detector 120 having an array

121 of pixels $P_{ij}$. Array 121 may, for a more efficient assessment of the surface, be a two-dimensional array, even though the present techniques may also be used with one-dimensional pixel arrays. The pixels detect IR radiation, e.g., in the infrared (IR) wavelength range mentioned above.

As mentioned, detector 120 may be a microbolometer, where the pixels are absorbing in the wavelength of interest, with each pixel provided with a temperature sensor for detecting the rise of temperature due to the absorbed irradiation. However, other types of IR-sensitive pixels may be used as well.

Further, each measurement head 20 may comprise an imaging system 122 adapted to project a section of surface 17 along a detection axis 28 onto pixel array 120.

The device also comprises at least one radiation source 220 adapted to generate radiation pulses. Radiation source 220 may be a flashlight generating electromagnetic radiation that is absorbed at least partially at surface 17. Its light is emitted forward, optionally through a diffusor 13, through an optional measurement window 14, and towards the surface 16 of a coated workpiece.

Measurement window 14, if present, should have a spectral transmission adapted to transmit the radiation pulses as well as the returning radiation from surface 17.

Light radiation source 220 may be a flash light with high peak intensity, or a laser, suitable to cause sufficient local warming up of surface 17. A diffuser 223 may be provided to more evenly distribute the light from radiation source 220. Instead of, or in addition to, diffuser 223, there may be a spectral filter for blocking unwanted radiation from radiation source 220, such as hard UV radiation.

In the shown embodiment, radiation source 220 is arranged in measurement head 20, e.g., as described in US2013/0037720A1. Radiation source 220 may be arranged concentrically around detector 120 and detection axis 28.

In the shown embodiment, each measurement head 20 comprises a radiation source 220. Alternatively, though, if there are several measurement heads 20, only a subset of them may comprise a radiation source.

In yet other embodiments, one or more radiation source(s) 220 may be provided separately from the measuring head(s).

The device further comprises a control unit 60 for controlling its components. And the measurement head(s) 20 may comprise a head controller 29 for controlling the components within the measurement head(s) 20.

Control unit 60 may, e.g., include a microcontroller and/or a local computer and/or remote computer (server). For example, it may monitor any user operatable controls of the device and drive a display 61. In particular, it may communicate with the head controller(s) 29 to receive the data from the detector(s) 120 as described below. It may be adapted to process the measured data, also as described below.

In operation, control unit 60 operates radiation source(s) 220 to generate an radiation pulse and subsequently processes the values $v_{i,j,k}$ of the pixels $P_{i,j}$ over several frames k thereof. Thus, for each pixel, it monitors the temperature decay after the radiation pulse as known from photothermal thickness measurement techniques. This allows to generate a map of the coating quality or thickness of surface 17.

However, for good accuracy, this type of signal processing profits from an exact knowledge of the temporal relationship between the time of the radiation pulse (in the following: the radiation time $t_p$) and the sampling times $t_{i,j,k}$ of the pixels $P_{i,j}$ in the frames k recorded after the radiation pulse.

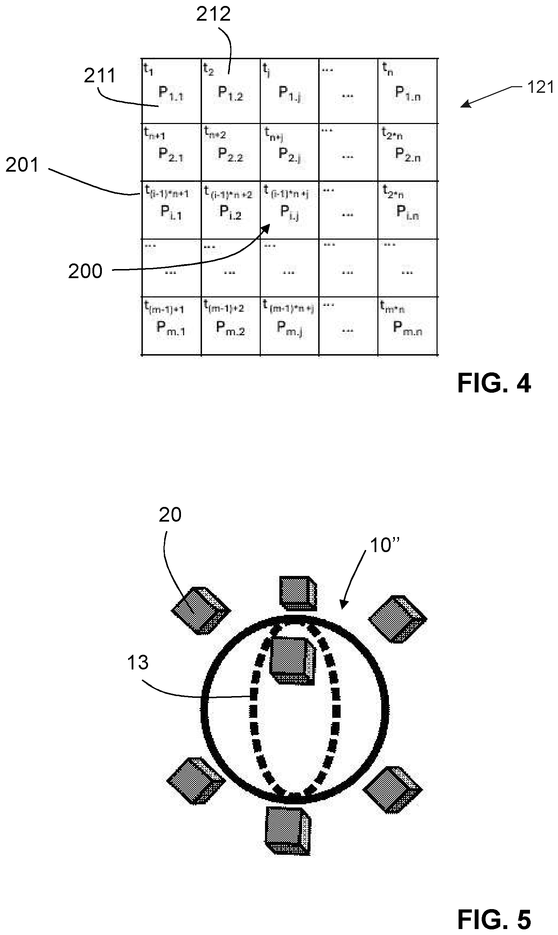

As mentioned above, though, even though the time $t_k$ at which a frame was recorded (e.g., the start time of a frame) is known, the sampling times $t_{i,j,k}$ may be a function of the pixel coordinates i, j. This is due to the fact that, in contrast to CCD camaras, many IR-sensitive detectors do not provide a global "gating" for all pixels. Rather, the pixels $P_{ij}$ are sampled sequentially (individually or in groups. For example, if the pixels are sequentially read out by rows (see Fig. 4) and, within each row, by column, with a constant time $\Delta t$ between each pixel, the time $t_{i,j,k}$ of the sampling of a given pixel $P_{ij}$ in frame k is given by

$$t_{i,j,k} = t_k + \Delta t \cdot ((j-1) + n \cdot (i-1)), \tag{1}$$

with n being the number of pixels per row (i.e., n being the number of columns) and i, j being the 1-based pixel coordinates.

Note that, depending on the detector architecture, rules other than Eq. 1 may apply. But, generally, the time $t_{i,j,k}$ will be a non-constant function of i, j, and $t_k$, i.e.,

$$t_{i,j,k} = f(i, j, t_k), \tag{2}$$

with a known function f.

In some embodiments, the times $t_{i,j,k}$ may be determined by head controller 29 and then transmitted from detector 120 to control unit 60, together with the values $v_{i,j,k}$ of the pixels $P_{i,j}$, either for each pixel individually or by providing suitable timing parameters.

However, in other embodiments, head controller 29 may not be equipped to determine the times $t_{i,j,k}$. This is particularly true when using a standard detector and/or if there is no common time base between control unit 60 and head controller 29. In such cases, head controller 29 will only transmit a data packet P comprising the array of values $v_{i,j,k}$ of a frame k to control unit 60. Such a data packet will also comprise frame-time-data indicative of the time $t_k$ of the frame This frame-time-data may, e.g., be encoded explicitly in the data packet, in respect to some timeframe shared between detector 120 and head controller 29, or it may be transmitted implicitly, namely because it can be derived (at least in approximation) from the time when head controller 29 transmits the data packet.

Fig. 11 illustrates some of the timing aspects in an example. The figure shows time t along its horizontal axis, and it has three rows. The topmost row, labelled M, shows the readout of the pixels of detector 120. The second row, labeled P, shows the data packets sent by head controller 29 to control unit 60, and the third row, labeled L, shows the times of the radiation pulses generated by the radiation source(s) 220.

As can be seen from the row R, the actual read-out of the pixels may be serial, starting, for frame k, at the time $t_k$ and, e.g., extend over a frame period with a duration t1. Value $v_{i,j,k}$ is read out at time $t_{i,j,k}$.

Head controller 29 is, in a simple approach, adapted to repetitively read out the frames, at a regular frame rate, such as 60 Hz, as shown. Between the frame periods 80, there may be gaps of a duration t'1, as shown, during which no pixels are read out.

The read-out values $v_{i,j,k}$ of a frame may then be transmitted as a data packet 81, to control unit 60, e.g., via USB, ethernet, or another communication channel. This transmission will typically take place at a time $t'_k$, later than $t_k$, but with a substantially constant time offset

$$O_t = t'_k - t_k. \tag{3}$$

The duration t2 of a packet 81 may differ from t1 and depends on the transfer rate of the data transmission.

Even if head controller 29 and control unit 60 do not share a common time base and head controller 29 does not explicitly embed the frame time $t_k$ in data packet 81, the time of arrival $t'_k$ of the data packet 81, the "packet time", allows control unit 60 to determine, at least in approximation, the frame time $t_k$ from Eq. (3) above.

(Instead of using the start times $t_k$, $t'_k$, other timing parameters of the frame and packet, such as their center or end, may be used.)

Control unit 60 may also control the radiation times $t_p$ at which the radiation source(s) (220) emit(s) the radiation pulses.

As mentioned, to ease data analysis, each radiation time $t_p$ should be positioned shortly before a frame period 80, advantageously in a gap between two consecutive frame periods 80.

Therefore, when a radiation pulse L is due, control unit 60 may predict the start time $t_k$ of the next frame and generate the radiation pulse at a time $t_p$ before the predicted start time $t_k$ such that the radiation pulse L does not overlap with the first frame period 80 after $t_p$.

For example, if the length of radiation pulse is $t_L$, then $t_p$ may be calculated to be at least $1.5 \cdot t_L$ before the predicted start time $t_k$ of the first frame period 80 that follows it, thereby reducing the risk of overlap. On the other hand, in addition or alternatively, $t_p$ may be calculated to be no more than $8 \cdot t_L$ before the predicted start time $t_k$ of the first frame period 80 that follows it.

For good measurements, the length $t_L$ should be short, e.g., less than 1 ms.

In some embodiments, as mentioned, $t_p$ may be calculated such that the radiation pulse L falls into a gap between two consecutive frame periods 80, which allows to use the frame period 80 preceding the radiation pulse for the previous decay measurement and/or for a pre-pulse measurement and the one following the radiation pulse for the next decay measurement.

For a more accurate selection of time $t_p$, control unit 60 should know the offset $O_t$ (Eq. (3)).

Offset $O_t$ may be known in advance, e.g., derived from the specifications of detector 120 and of the transmission channel between the detector 120 and control unit 60.

In other embodiments, though, the time offset $O_t$ may be determined using calibration measurements. To do so, test measurements may be performed by

a) generating light pulses L at different times in respect to the packet times $t'_k$ and
b) monitoring the values $v_{i,j,k}$ of the following arriving data packets 81.

If a light pulse falls into a frame period 80, the pixel values $v_{i,j,k}$ received in step b) will show a build-up and decay of temperature over different pixels i, j. In this case, a model based on Eq. (1) or (2) and Eq. (3) and having $O_t$ as a parameter can be set up to predict the rise and fall of the signal over a frame, and $O_t$ can be fitted to the measured results.

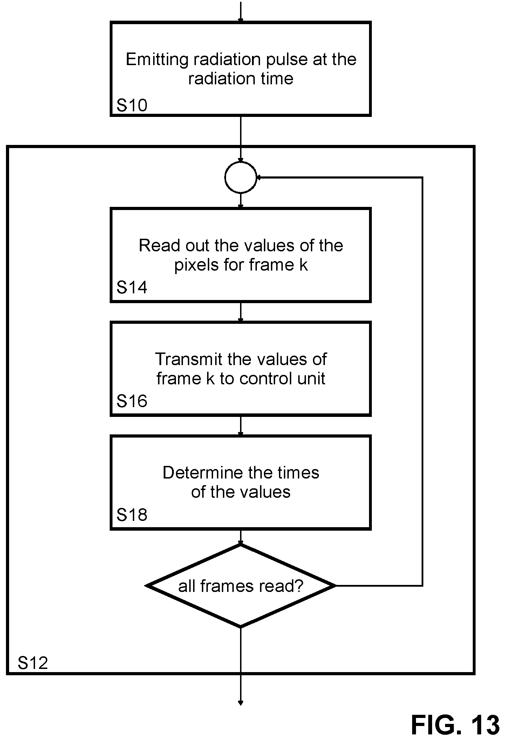

Fig. 13 shows some of the steps that may be performed during a measurement.

In a step S10, a radiation pulse L is emitted at the radiation time $t_p$, with $t_p$, e.g., as determined above.

In step S12 (which may come after step S10 or overlap with step S10 (in case the frame recording starts even prior to the radiation pulse), the frames k are recorded.

For each frame k, the pixel values $v_{i,j,k}$ are read out in step S14.

In step S16, the pixel values $v_{i,j,k}$ are transmitted to control unit 60, where they arrive at times that are different from their recording times.

In step S18, control unit 60 determines the times $t_{i,j,k}$ as described above.

Steps S14 - S18 are repeated for all frames k to be recorded for a given radiation pulse.

For analyzing the thermal response of surface 17 to a radiation pulse at time $t_p$, the decay of the temperature values $v_{i,j,k}$ after the pulse is of relevance. This analysis is best performed in a timeframe relative to the pulse time $t_p$. Hence, in some embodiments, control unit 60 is adapted to determine, for a given radiation pulse at the radiation time $t_p$, the time offsets $t'_{i,j,k} = t_{i,j,k} - t_p$ of the pixel values $v_{i,j,k}$ for several frames k following the pulse. Then, control unit 60 may determine the parameter of interest from the decay of the values $v_{i,j,k}$ as a function of the time offsets $t'_{i,j,k}$. This determination may include the fitting of a parameterized thermal model of the surface to the values $v_{i,j,k}(t'_{i,j,k})$.

Optionally, in such an analysis, the values $v_{i,j,k}$ of at least one frame k prior to the radiation pulse may also be used.

The device and method may be used for measuring various parameters of a coated surface.

As mentioned, an important parameter is the thickness of a coating on the surface.

To measure coating thickness at a point from which a given pixel $P_{ij}$ receives radiation, control unit 60 may be adapted to use the values $v_{i,j,k}(t'_{i,j,k})$ of the pixel $P_{ij}$ over the frames k for fitting a thermal model of the coating and its substrate. The coating thickness is a parameter of this model, and its values can be determined in the fitting process.

Another parameter that may be measured is the composition of a coating, e.g., if the thickness of the coating is known but the composition may vary. In this case, again, a model is fitted to the measured values, with the composition being one of the model's fitted parameters.

Other parameters include surface porosity, surface composition, or any other parameters that influence how the temperature decays after a radiation pulse.

The parameter may also be a quality parameter of a surface or another parameter that can be derived from the types of parameters mentioned above, such as an indicator of coating defects.

As shown in Fig. 11, the device may comprise several measuring heads 20. In this case, and as described in more detail below, at least some area 105 of surface 17 may be observed by at least two of the measuring heads 20, which can be used to gain more accurate results.

Further, if there are several measuring heads 20 with overlapping views, they may be synchronized to record the frames at the same times $t_k$ in order to make it easier timing the radiation pules in respect to the frames.

In the following, some examples illustrating applications and further variants will be described.

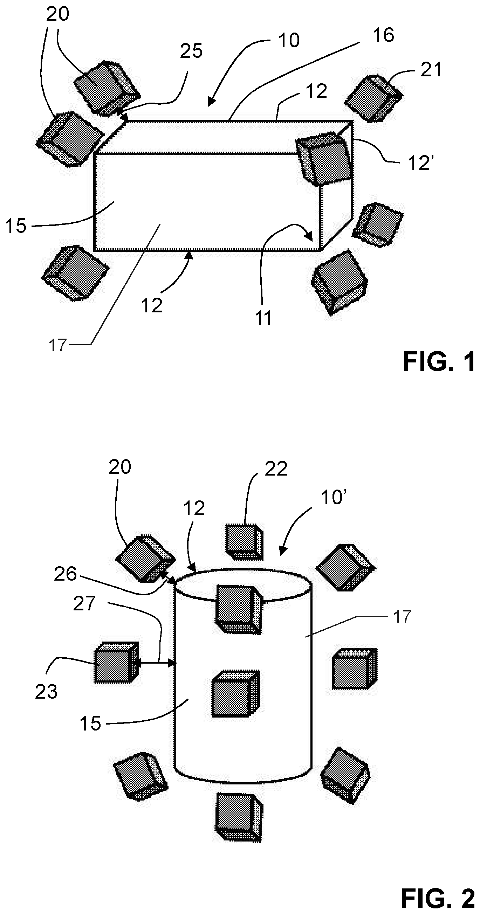

Fig. 1 shows a schematic perspective view of a plurality of measurement heads 20 with an object 10 in the shape of a parallelepiped and having a coated surface 17. The shape of the coated object is usually of course not a specific simple geometrical object but comprises features of several different geometrical shapes. In this sense, Fig. 2 shows a schematic perspective view of a plurality of measurement heads 20 with a coated object in the shape of a cylinder 10' and Fig. 5 shows a schematic perspective view of a plurality of measurement heads 20 with a coated object in the shape of a sphere 10". Therefore, reference numeral 10 is used for any object as such, usually having flat or continuous surfaces, edges and corners. Further deviations from simple continuous surfaces may, e.g., be cavities, recesses and embossments. Actual objects may comprise a number and combination of surface features shown in these drawings. Such coated objects may have corners 11 and edges 12 with increased necessity relating to check and ensure a sufficient coating.

Any measurement head 20 comprises at least an irradiation sensor, formed by an IR-sensitive detector 120 having a plurality of pixels, e.g., as described above, and may comprise an radiation source, especially a flashlight, 220, such as, e.g., described above. In further figures, such an radiation source 220 is shown being positioned around the detector 120, but other configurations are possible as explained below.

A measurement head may have multiple radiation sources or share a radiation source with one or multiple irradiation sensors.

A measurement head 20 may also comprise two or more irradiation sensors, e.g., positioned around a central radiation source 220.

To improve recording accuracy, a separate detector 120, or only referenced by numeral 20, may be provided as part of a measurement head for each corner 11.

If the coated object 10 is very long, one or more further measurement heads 20 may be provided and positioned to be oriented towards an edge 12 between the corners, e.g., depending on the length of the edge.

It is also possible to reduce the number of sensors 20 by means of rotating and orientating the object 10 to be checked, with a relative movement in respect to the measurement head(s) 20, so that the measurement head(s) 20 is/are sequentially checking all corners 11 and edges 12.

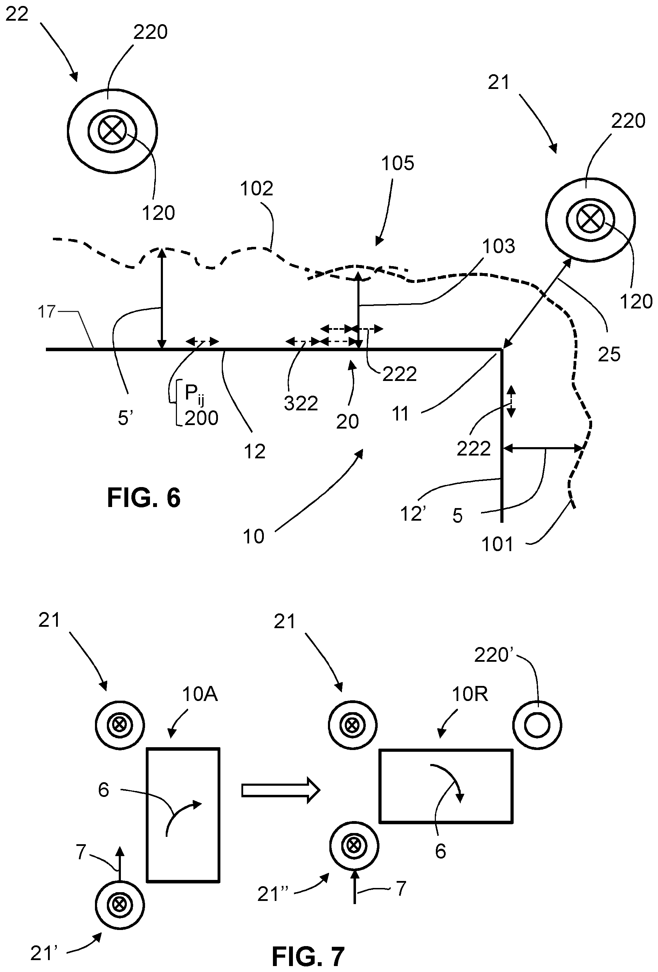

Additional measurement head(s) 20 can be positioned over a fixedly presented object for the sequential check. This will be explained in connection with Fig. 7.

Each of the Fig. 1, 2 and 5 to 7 shows the situation of an object to be checked with positioned measurement head(s) 20 in the moment of illuminating the object and the measurement of the radiation response. The reference numeral 20 is used for indicating measurement heads with IR sensors (optionally with radiation sources) per se, while reference numerals 21, 22 and 23 are used if a specific position of such a measurement head with an IR-sensitive detector is shown in the drawings.

Each measurement head 20 has - during the measurement cycle - a detection axis 25, 26 or 27, with an enclosing measurement cone (with the term "cone" advantageously also covering other divergent volume structures, e.g., pyramids), directly towards a corner, an edge, and/or a continuous surface, respectively. The detectors 120 of the measurement heads 20 "see" the surface of the object by detecting infrared radiation emitted or reflected from different areas of the surface. Each sensor captures this radiation through an imaging system 122, as shown, e.g., in Fig. 11, that directs the radiation onto the pixel array 121, with each pixel corresponding to a specific area of the object. The field of view of detector 120 of each measurement head 20 is determined by the area it can observe, and the resolution of the detector defines how finely the surface is divided into detectable regions.

To ensure the entire surface 17 of the object is measured, multiple measuring heads 20 may be positioned around the object 10. Their fields of view may overlap, allowing for comprehensive coverage. This overlap is especially useful for capturing the entirety of critical features like edges and corners. For instance, as seen in Fig. 6, an edge point may be within the detection range of multiple detectors 120, such as one oriented along the edge and another covering the adjacent surface. Similarly, corner points are observed by detectors oriented toward the adjoining surfaces.

Each detector 120 may collect an array of values representing the radiation from its assigned portion of the object's surface 17. These values are combined to form a complete representation of the infrared radiation across the entire surface 17. This configuration ensures that every point on the object, from flat surfaces to complex geometries like corners and edges, is within the detection range of at least one sensor, providing accurate and continuous coverage.

For example, any surface point, e.g., the point 16 in the middle on the edge 12 between two corners 11, is within the detection cone of at least two detectors 120, such as the two corner-oriented sensors or one corner-oriented sensor and one sensor oriented towards an intermediate edge 12. The plurality of measurement heads 20 is positioned to cover the entire surface 17 to be measured of the coated object with at least one measuring head 20. In other words, the number of measuring heads 20 may be chosen such that, for every point of the entire surface 17 of the coated object, there is a measured detection value after irradiation of the object.

Although the measurement itself mainly uses the detected irradiation levels after the peak value 44 is reached, it may be of advantage to start the detection of irradiation before the flashlight (i.e., the radiation pulse) is triggered, especially to detect the peak value 44. Such a point is of course not a point in the mathematical sense but a predetermined area around such a mathematical point depending on the resolution of the sensor. This is also correct for edge points and corner points, which, in reality, form (since they are covered by a coating of finite thickness) rounded areas at the edge or corner point.

Radiation sources 220 may be provided separately or, e.g., around the measuring heads 20. Similar to the detectors, the radiation cones of the radiation sources need to cover the complete area that is to be measured, and, if several radiation sources are used, there needs to be an overlap of the radiation cones. This makes sure that the whole measurement area is covered and, at the same time, increases the irradiation energy in the sections further away from the radiation sources.

Fig. 4 shows a schema of an array of pixels of a measurement head and related measured values and related time stamps. Each detector 120 comprises an array of sensor pixels oriented towards the surface to be inspected. Each square 200, 201, 211, 212 represents a pixel of the pixel array 121 and is related to the smallest measurable area portion of an object. Different measurable area portions do not necessarily have the same surface size.

The emitted radiation of the object during and after irradiation may be detected pixel per pixel with defined measurement intervals per pixel as described above.

The detector 120 may have a defined frame refresh rate, with each frame delivering a full array of values $v_{ij}$ for all pixels, with i, j being the pixel coordinates ranging from 0 to m - 1 and 0 to n - 1, respectively from $P_{1,1}$ to $P_{m,n}$. The start of the measurement interval for pixel $P_{i,j}$ is marked as $t_{(i-1)*n+j}$.

After a frame period is completed, the cycle starts again with the first pixel 211.

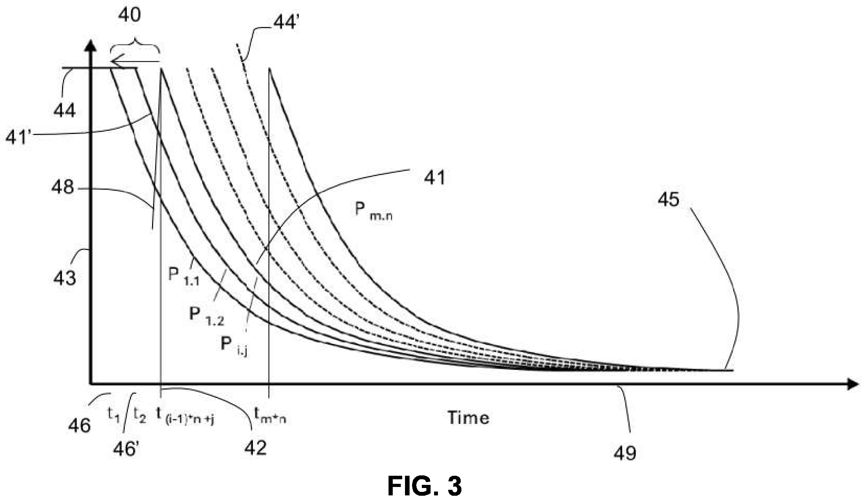

The times $t_{i,j,k}$ of recording the pixel values $v_{i,j,k}$ may be calculated using Eqs. (1) or (2) above. Fig. 3 shows an alternative view of illustrating this.

In Fig. 3, curve 41 represents the values over time for the pixel $P_{i,j}$.

Fig. 3 shows a diagram of measured values over time for a plurality of such pixels of one measurement head 20. The horizontal axis of Fig. 3 shows the time prior to the corrections in accordance of Eqs. (1) or (2).

The values of the measurements of the pixels are starting from a high response value (here marked 44) depending on the moment in time when the flashlight illuminates the scenery and then decrease until the end of measurement (marked around 45). The line 41 for pixel $P_{ij}$ is not a continuous curve but consists of discrete values when the irradiation response for a pixel $P_{ij}$ is read out. The lines for different pixels from $P_{11}$ to $P_{mn}$ are shifted in time since the sensors are read out sequentially. As mentioned, Fig. 3 is not a time synchronized representation (i.e., without the correction of Eqs. (1) or (2)) of the measurement values $v_{ij}$.

In general, and for all embodiments described here, if there are several measurement heads 20, 21, 22, the times $t_{i,j,k}$ of the values $v_{i,j,k}$ of each one of them may be determined, e.g., by control unit 60, using Eqs. (1) or (2) and (3), but, depending on the hardware, different parameters, such as different values for $\Delta t$ and/or $Q_t$ may need to be applied for each measurement head.

Further, if there are several measurement heads 20, 21, 22, their frame taking may be synchronized. Hence, control unit 60 may be adapted to send out trigger signals that synchronize the measurement heads to record the frames at the same frame times $t_k$. This simplifies the timing of the radiation pulses. It is particularly useful if control unit 60 controls the times $t_p$ of the radiation pulses.

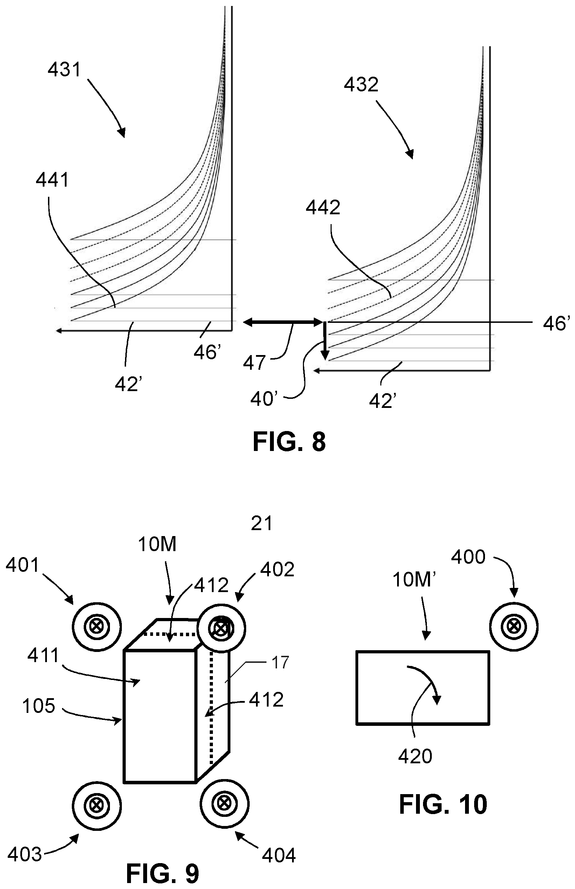

The measurement heads 20, 21, 22 may be synchronized such that each measurement head is detecting the same pixel, e.g., the first pixel 211 of each array at the same time. It is also possible to synchronize measurement heads with an unequal number of pixels. Then the first pixel of the array is synchronized with all measurement heads and for the remaining of the pixels time compensation is calculated within the measurement server. This will be further explained in connection with Fig. 8 to 10.

The lines 41 for the different pixel $P_{i,j}$ are shown to start at a level 44. Level 44 is not a predetermined threshold; it can be the highest measured value during or after a flashlight, which can be different for different pixels; here the measured level 44' is shown to be different for a different pixel. Additionally, there is usually a continuous measurement before this starting point 42 for the pixel $P_{ij}$ whereby the measurement corresponds to an increasing irradiation level 48. This increasing irradiation level happens for all pixels.

As explained in connection with Fig. 8 to 10 as well as above, a synchronized measuring system can use several measuring head positions 20 and only one server as a control unit 60. In other words, the signals measured by all different measuring heads 20 or the same measuring heads at different measurement positions as explained in connection with Fig. 10 are transferred to the same control unit 60. The main advantages achieved are increased accuracy due to optimized synchronization and higher brightness due to the overlapping illumination of several measuring heads.

An overlapping area 105 as shown in Fig. 6 is seen by more than one measuring head. Using the radiation data from one point of the objects captured by at least two measuring heads 20, the system may optimize the evaluation process. Quality of measurement can be further increased by taking overlapping measurements of surfaces with different measuring heads with a calculation or comparison of the measurements of the measuring heads.

Instead of transferring the signals measured by a plurality of measuring heads 20 to the same control unit when an image is taken by illumination at the same time, it is also possible to reduce the number of heads and to re-orient the measuring heads 20 and/or the object 10 to take additional pictures when the illumination effect as shown by curves 41 in Fig. 3 is gone. This time is marked as end of measurement time 45 in Fig. 3.

By synchronizing the camera frames with the flash of one or more radiation sources, a very accurate overall picture can be obtained, and, as explained above, the synchronization can happen over several images over time. In this respect, each measurement head 20 receives an irradiation response 41 from the illuminated surface. The irradiation response 41 starts at time 42 for pixel $P_{ij}$. Without the correction of Eq. (1) or (2), the starting time 42 is different for different pixels of the same measurement and, in case of several measurement heads, it is also different for a pixel "looking" at the same area as shown by the area 105 in Fig. 6 covered by more than one measurement. As explained above, the control unit applies a specific time shift 40 for each pixel of each measurement head 20 for synchronizing the measurement response. In this respect, Fig. 3 shows the measurement values as they arrive in the control unit before application of the different time shifts, already corrected for the effect of optional reorientation of measurement heads 20 or object 10 over several images as shown in connection with Fig. 7.

The triggering of radiation pulse may form the basis for synchronization and is calculated to be the starting point t1 46 for every measuring head 20.

By suitably arranging the measuring heads, detected reflections of the radiation during and after irradiation can be eliminated. This will prevent a false reading arising from specular reflection. The above-described overlapping of the detection cones can also eliminate misleading reflections as will be explained in connection with Fig. 6.

Distributing several measurement heads 20, especially as shown in Fig. 1, 2 and 5, allows to measure the coating of an object, such as, e.g., the coating of a battery cell, over a large angular range or around the whole part, called $4\pi$. The use of several measurement heads allows to cover the entire object 10, depending on the holder, in a single measurement, which results in significant time savings. However, the synchronization method allows to use a lower number of measurement heads 20.

In some embodiments of the device, it is possible to measure, depending on the geometry and arrangement of the measuring heads, up to more than 15'000 measuring points per $cm^2$. This allows to cover, with macro optics, an area of less than 0.1 mm per measuring point. Of course, the actual pixel size is independent of the measurement result with the synchronization as shown in Fig. 3, i.e., pixel synchronization always works the same, no matter how big of an area a pixel represents.

By accurately measuring the coating around the object, it is possible to determine how much coating material (volume) has been applied. This is thus possible without contact and with just one measurement after coating. In this context, "one measurement" is also related to a plurality of images taken after reorientation of measurements heads and object as explained in connection with Fig. 7.

Using just one control unit 60 allows to provide one single measurement software applicable with time shifts for all measurement heads 20. Of course, using a single control unit 60 also results in a significant cost reduction. It is also possible to centrally read out, control and store system parameters from external systems. This advantage also applies with a sequential taking of images with reoriented measurement heads 20 and object 10.

Fig. 6 shows a very schematical detail view of a cross-section of an object 10 with measurement heads 21 and 22, the indication of associated surface areas 222 and 322 of pixels 200 of these measurement heads 21 and 22, respectively, and the indication of the calculated thickness 5 and 5' of the coating based on measurements for these measurement heads 21 and 22, respectively.

The measurement head 21 on the right may comprise a flashlight 220 as radiation source and a concentric detector 120. The measurement head 21 is positioned with the center of its illumination and observation cone along axis 25 over a corner 11. A second measurement head 22 on the left is positioned over the edge 12 of the object 10 or - in a further embodiment not shown in the drawings - a measurement head 23 is positioned on a continuous surface 15 of the object 10 as shown in Fig. 2. The pixels of the left measurement head 22 are observing the areas 322 of the surface, indicated by the arrows in the drawing plane. Each pixel is related to a specific surface area. The pixels of the right measurement head 21 are observing the areas 222 of the surface, indicated by the arrows in the drawing plane.

When an image (frame) is taken, the flashlights 220 are synchronized, and each pixel area 222 and 322 receives radiation of the associated specific surface area. Each pixel area 222 and 322 is read out a number of times until the end of the measurement period (marked 45 in Fig. 3), and the data ($v_{i,j,k}$) over time is transferred to the control unit 60. This data may be visualized by the curves 41 in Fig. 3.

Since the data is read out sequentially, the control unit 60 is adapted to make said time shift 40 to a common starting point 46, i.e., to calculate the times $t_{i,j,k}$ using Eqs. (1) or (2).

Taken alone for each measurement head 21, the different curves 41 allow to calculate the coating thickness distribution 101 of the coating based on the measurement of the right measurement head 21. The same applies for the calculation of the coating thickness distribution of the coating 102 based on the measurement of the left measurement head 22.

For every surface point of the object 10, a thickness of coating 5 or 5' can be established.

In some embodiments, there may be, as described, a measurement overlapping region 105, where both measurement heads 21 and 22 provide results. This is due to the fact that the surface is covered by measured surface areas in pixel areas 222 as well as pixel areas 322. This overlapping area 105 can be much larger or smaller than shown in Fig. 6. This allows to calculate a specific corrected thickness value 103 for each of the points in areas covered by both (or even three or more) measurement heads 20.

The calculated corrected thickness may be used as an additional reference for the complete measurement area of each measuring head involved. This improves the measurement performance in terms of accuracy and precision of the measurements. This is shown as that the length of the double arrows 200, 222 and 322 vary depending on the distance from the associated measurement head.

As mentioned, the measurement heads 20 may be synchronized by control unit 60. Such synchronization comprises the synchronization of the starting point of the measurement 46, i.e., of the frame periods, related to the maximum value of the measured radiation response after a flash. Optionally, it may also comprise the synchronization of the read-out windows of each pixel $P_{ij}$.

Fig. 7 shows a further embodiment of the device for the contactless and non-destructive testing of a surface with an arrangement of less measurement heads, here two heads 21 and 21', and reorientation of the measurement heads, here head 21' and/or object 10A to 10R. It is possible to replace simultaneous taking of images (i.e., frames) around the entire object 10 by taking subsequent images with less measurement heads 21. Here, only two heads 21 and 21' are shown to be positioned over the object 10A at two corners 11.

An image with synchronized flashlights is taken and handled as explained above in connection with Fig. 3, 4 and 6. Then the measurement head 21' is moved, here upwards, while the object is rotated from position 10A to 10R. This is a rotation according to arrow 6. The movement of head 21' positions the head in the same predefined and predetermined distance from a different corner of the object. In Fig. 7, measurement head 21 "looks" at the corner, measurement head 21' was positioned initially. Of course, it is possible to reorient the object 10A to a different rotated object which can also be moved laterally, so that every time new corners are examined. Fig. 7 illustrates that it is possible to make images of the surface of an object sequentially and thus reduce the number of cameras and radiation sources.

Additional radiation sources 220' may be provided if necessary. Here, radiation source 220' is positioned at the long-distance corner vis-à-vis measurement head 21 and is therefore positioned for object 10R as were the two radiation sources 220 for object 10A associated to the two measurement heads 21 and 21'. In this context, it is favourable to have radiation sources 220 provided independent from the measurement heads 21 and 21'.

With a post-synchronization of the measured irradiation levels due to the knowledge of the common starting level 44 for each pixel and a connected shift 40 for a common starting point 46, the same result as with the eight-head devices of Fig. 1 can be obtained with only one measurement head 20 even when the images are taken sequentially.

Fig. 8 shows two diagrams of measured radiation values over time for a plurality of pixels at two measurement positions 400, 401, 402, 403 or 404 as will be shown in Fig. 9 and 10. The radiation answer of a detector at a first measurement position has received the reference numeral 431 and the radiation answer of a detector at a second measurement position has received the reference numeral 432. The radiation responses 431 or 432 are taken by a measurement head 20 and communicated to the control unit. Therefore, the sequence of curves are the same curves as explained in connection with Fig. 3.

The synchronization 47 between the radiation answer 431 and 432 of two measurement positions is achieved with the selection of a common synchronized starting point 46' for a radiation answer 441 of a predetermined pixel at a first measurement position and for a radiation answer 442 of a predetermined pixel at a second measurement position. This synchronization comprises a shift 40' (i.e. the calculation of Eqs. (1) or (2) and (3)) between the answer of a measurement head 20 at two measurement positions.

With a communication of the time of the flash event, it does not matter if there are two separate detectors at the two measurement positions, or if one detector is moved between the two measurement positions, or if the object is moved to be positioned in respect to the single detector to create the two different measurement positions for this detector.

Fig. 9 shows an object to be measured 10M' with four measurement heads at four measurement positions 401, 402, 403, 404, and Fig. 10 shows an object to be measured 10M' with one measurement head at a specific measurement position 400, indicating a rotation or linear movement or both of the object 10M' for a relative move of the measurement head to a specific further measurement position. At the measurement positions 401, 402, 403, 404, there can be separate measurement heads 20, or these positions will be reached through a rotation or displacement as indicated in Fig. 10.

Fig. 9 furthermore shows the coverage of a surface through these four measurement positions 401, 402, 403, 404. The four measurement positions 401, 402, 403, 404 are shown to be in front of the four front corners of the parallelepiped. The detectors at these positions are detecting surfaces 411 and 412 comprising entire surface 17 with edges and corners and a partial surface with partial edges and corner, respectively. In short, these four measurement positions look at the front "half" of the parallelepiped. This is related to an area of edge and the strip is present running over the surface 411 to end in area 412 covered by more than one measurement which is marked with reference numeral 105 as already shown in Fig. 6.

As described above, there may be areas of surface 17 covered by more than one measurement, such as area 105 in Fig. 6 or Fig. 11. The measurements may be simultaneous measurements (as illustrated in Fig. 9) carried out by two or more detectors 120 at different positions concurrently, or they may be consecutive measurements (as illustrated in Fig. 10) with a relative movement of the object 10 in respect to the detector 120 between the measurements.

In this case, first and second measurements are taken from at least a first and a second position (relative to the object), with the first and second position being different.

Hence, in more general terms, control unit 60 receives the values $v_{i',j',k'}$ of one or several first frames k' (for the first measurement) and the values $v_{i'',j'',k''}$ of one or several second frames k'' (for the second measurements), with the first and second frames being recorded from different first and second positions. The frames may be recorded

- by the same detector 120 that was moved in respect to surface 17 between the two different positions or
- by two different detectors 120 located at the different positions.

Control unit 60 determines pairs of pixels $P_{i',j'}$ and $P_{i'',j''}$ in the first frame k' and in the second frame k'' that receive the detection radiation from the same spots of the surface. In other words, each such pair consists of one pixel in the first frame and one pixel in the second frame, with both pixels receiving light from the same point of surface 17.

Such pairing of pixels requires control unit 60 to know a coordinate transformation between the pixel coordinates i', j', and i'', j'' of the first and second frames.

This coordinate transformation may be calculated from the geometry of surface 17 as well as from the known first and second positions, the orientation of the detector(s) in said positions, as well as the mapping generated by imaging system 122 of the detector(s).

In another embodiment, which is more flexible, the coordinate transformation may be established by displaying, on display 61, images of a first and a second frames and by accepting input, from a user, that identifies corresponding points in the first and second frame. Then, control unit 60 may determine, based on the user's input, a mapping between the first and second frame in order to identify pairs of pixels.

Once the pairs of pixels have been determined by control unit 60, their values $v_{i,j,k}$ are combined to gain an improved estimate of the parameter (e.g., of the thickness) of surface 17 at the surface point each of the pair of pixels receives radiation from.

Such an improved estimate of may be obtained in various manner.

In one class of embodiments, control unit 60 determines a first estimate P1 of the parameter using the values $v_{i',j',k'}$ and their times $t_{i',j',k'}$ of pixels $P_{i',j'}$ in the first frame(s) k'. In particular, it combines the values $v_{i',j',k'}$ and their times $t_{i',j',k'}$ over several first frames k'. For example, it may use curve fitting with a parameterized model of the thermal behavior of coating 17 upon irradiation, with one of the (optionally several) parameters of the model being the parameter to be determined.

In the same manner, control unit 60 determines a second estimate P2 of the parameter using the values $v_{i'',j'',k''}$ and their times $t_{i'',j'',k''}$ of pixels the second frame(s) k''.

The first and second estimate P1, P2 of the parameter may then be combined, e.g., by calculating an average or weighted average of P1 and P2.

In other embodiments, the "improved estimate" of the parameter may also be obtained by simultaneously processing the values $v_{i',j',k'}$ and $v_{i'',j'',k''}$, e.g., by providing a thermal response model having two dependent (output) variables, with one of them predicting the values $v_{i',j',k'}$ as a function of time and the other predicting the values of $v_{i'',j'',k''}$ as a function of time. Said model may have an additional parameter depending on the ratio of the signal strength that the pixels $P_{i',j'}$ and $P_{i'',j''}$ receive from the surface point (thereby accounting for distance and projection angle).

As follows from the above, a device is provided for the contactless and non-destructive testing of a surface by measuring infrared radiation thereof in response to thermal excitation comprises one or more electromagnetic radiation sources 220, each adapted to emit excitation radiation directed onto the surface 17 to be tested. One or more detectors 120)with pixel arrays 121 are directed towards the surface 17 and record the response to the excitation radiation as a function of time. A control unit 60 receives the values from the pixels and determines the times $t_{ijk}$ at which the values were measured. Control unit 60 may control the timing of the one or more radiation sources 220, and/or it may identify pairs of pixels recording the same point on the surface 17 from different points of views.

**List of Reference Signs**

| | |
|---|---|
| 5 | thickness (by first measurement head) |
| 5' | thickness (by second measurement head) |
| 5" | thickness (by combined measurements) |
| 6 | rotation arrow |
| 7 | shift arrow |
| 10 | coated object (parallelepiped) |
| 10' | coated object (cylindrical object) |
| 10" | coated object (sphere) |
| 10A | coated object at first position |
| 10M | coated object (fixedly positioned) |
| 10M' | coated object (displaced and rotated for measurement) |
| 10T | coated object at second position (after rotation) |
| 11 | corner of coated object |
| 12 | edge of coated object |
| 12' | further edge of coated object |
| 13 | indication of sphere surface of coated sphere |
| 15 | flat or curved continuous surface |
| 16 | point on surface, here on edge |
| 17 | surface |
| 20 | measurement head, optionally with radiation source |
| 21 | measurement head positioned at a corner |
| 22 | measurement head positioned at an edge |
| 23 | measurement head positioned at a continuous or flat surface |
| 25 | detection axis of sensor (directed towards corner) |
| 26 | detection axis of sensor (directed towards edge) |
| 27 | detection axis of sensor (directed towards surface) |
| 28 | detection axis (general) |
| 29 | head controller |
| 40 | time shift for $P_{i,j}$ |
| 40' | time shift between two measurement positions |
| 41 | curve of measured value of radiation for a pixel $P_{i,j}$ |

| 41' | curve of measured value of radiation a predetermined pixel, e.g. for the first pixel |
| 42 | starting point of measurement in time for pixel $P_{i,j}$ |
| 42' | starting time at measurement position |
| 43 | axis of measured value of radiation |
| 44 | maximum value of measured radiation response after flash |
| 44' | higher maximum value for a specific pixel |
| 45 | end of measurement time |
| 46 | synchronized starting point in time for one measurement head |
| 46' | synchronized starting point in time for a specific measurement position |
| 47 | synchronising of radiation answers |
| 49 | axis of time |
| 60 | control unit |
| 61 | display |
| 80 | frame period |
| 81 | data packet |
| 101 | calculated thickness by first measurement |
| 102 | calculated thickness by second measurement |
| 103 | calculated thickness by more than one measurement |
| 105 | area covered by more than one measurement |
| 120 | irradiation detector |
| 121 | pixel array |
| 122 | imaging system |
| 200 | pixel i,j |
| 201 | time marker for reading the pixel |
| 211 | first pixel of first line |
| 212 | second pixel of first line |
| 220 | flash, radiation source |
| 222 | pixel area of 21 |
| 322 | pixel area of 22 |
| 400 | fixed single measurement position used for several measurements |
| 401 | first measurement position |
| 402 | second measurement position |
| 403 | third measurement position |
| 404 | fourth measurement position |
| 411 | surface of interest (entire surface with edges and corners) |
| 412 | surface of interest (partial with partial edges and corner) |
| 420 | displacement of coated object 10M' between measurement positions |
| 431 | radiation answer of detector at first measurement position |
| 432 | radiation answer of detector at second measurement position |
| 441 | radiation answer of a predetermined pixel at first measurement position |
| 442 | radiation answer of a predetermined pixel at second measurement position |

**Claims**

1. A method for the contactless and non-destructive measurement of a parameter of a surface (17), in particular of a thickness of a coating at the surface, by measuring an infrared radiation thereof, comprising:

- emitting, at radiation times $t_p$, radiation pulses by means of at least one electromagnetic radiation source (220) and directing them onto the surface to be measured,
- receiving detection radiation emitted by the surface (17) in response to the radiation pulses by means of at least one detector (120), wherein the detector (120) comprises a plurality of pixels ($P_{i,j}$),
- reading out values $v_{i,j,k}$ of the pixels ($P_{i,j}$) in a series of consecutive frames k, with said values representing signals from the pixels at times $t_{i,j,k}$, wherein the times $t_{i,j,k}$ depend on a time $t_k$ of the frame k as well as on a position i,j of the pixel ($P_{i,j}$) in the detector (120),

and wherein said method further comprises
- determining, by means of a control unit (60), the times $t_{i,j,k}$ from the position i,j and the time $t_k$ of the frame k, and
- determining, by means of the control unit, the parameter using the values $v_{i,j,k}$ and their times $t_{i,j,k}$.

2. The method of claim 1 wherein the detector (120) is a bolometric detector.

3. The method of any of the preceding claims comprising

   - determining, for a given radiation pulse at the radiation time $t_p$, the time offsets $t'_{i,j,k} = t_{i,j,k} - t_p$ for several frames k between the given radiation pulse and a next radiation pulse, and
   - determining the parameter from a decay of the values $v_{i,j,k}$ as a function of the time offsets $t'_{i,j,k}$.

4. The method of any of the preceding claims comprising,

   - receiving, by the control unit (60), for each frame k, a data packet comprising the values $v_{i,j,k}$ and being indicative of the time $t_k$ of at least one frame k,
   - determining, by the control unit (60), the radiation time $t_p$ for a later radiation pulse as a function of the time $t_k$ of one or more of the received data packets.

5. The method of claim 4 wherein the radiation time $t_p$ of the later radiation pulse is determined, by means of the control unit (60), such that the later radiation pulse is timed to lie between frame periods of two consecutive frames k1 and k2.

6. The method of any of the preceding claims comprising

   - determining, by the control unit (60), the time $t_k$ of a frame k from a time of arrival of a data packet of the values $v_{ijk}$ and an offset $O_t$.

7. The method of any of the preceding claims comprising

   - receiving, by the control unit, the values $v_{i',j',k'}$ of a first frame k' and the values $v_{i'',j'',k''}$ of a second frame k", with the first and second frames being recorded from different first and second positions

      a) by the same detector (120) moved between the different positions, or
      b) by two different detectors (120) located at the different positions, and

   - determining, by the control unit (60), pairs of pixels $P_{I',j'}$ and $P_{I'',j''}$ in the first frame k' and in the second frame k" receiving the detection radiation from the same spots of the surface.

8. The method of claim 7 comprising

   - receiving, by the control unit (60), the values $v_{i',j',k'}$ of several first frames k' recorded from the first position and the values $v_{i'',j'',k''}$ of several second frames k" recorded from the second position,
   - determining, by means of the control unit (60),

      a) a first estimate (P1) of the parameter using the values $v_{i',j',k'}$ and their times $t_{i',j',k'}$ of a pixel $P_{I',j'}$ in the first frames and
      b) a second estimate (P2) of the parameter using the values $v_{i'',j'',k}$ and their times $t_{i'',j'',k}$ of a pixel $P_{I'',j''}$ in the second frames, with the pixels $P_{I',j'}$ and $P_{I'',j''}$ being a pair receiving the detection radiation from the same spots of the surface,

   - combining, by means of the control unit, the first and second estimate (P1, P2) of the parameter for obtaining a combined parameter.

9. The method of any of the claims 7 or 8 wherein the first frame k' and the second frame k" are recorded by two different detectors (120).

10. The method of any of the claims 7 or 8 wherein the first frame k' and the second frame k" are recorded by the same detector (120), wherein said method comprises moving the detector (120), in respect to the surface, from the first to the second position between recording the first frame k' and the second frame k".

11. The method of any of the claims 7 to 10 comprising

- displaying, by the control unit (60), images of the first and second frame on a display (61),
- receiving, by the control unit (60), user input identifying corresponding points in the first and the second frame, and
- determining, by the control unit (60) and based on the user input, a mapping between the first and the second frames.

12. The method of any of the claims 7 to 11 comprising

- receiving, by the control unit (60), the values $v_{i',j',k'}$ of several first frames k' and the values $v_{i'',j'',k''}$ of several second frames k".

13. The method of any of the preceding claims comprising several measurement heads (20), wherein the method comprises:

- synchronizing the measurement heads (20) to record the frames at the same times $t_k$.

14. A device for performing the method of any of the preceding claims comprising

- a radiation source (220) structured to emit the pulsed excitation radiation onto the surface to be measured,
- a detector (120) positioned to detect radiation emitted by the surface in response to the excitation radiation, with the detector (120) comprising an array (121) of pixels, and
- a control unit (60) programmed to perform the method.

15. A method for the contactless and non-destructive measurement of a surface (17) by measuring an infrared radiation thereof, comprising: providing at least one electromagnetic radiation source (220) adapted to emit excitation radiation in an excitation beam along an associated radiation axis which can be directed onto the surface to be measured, providing at least one detector (120) at a measurement position (400; 401, 402, 403, 404) arranged on a detection axis (25, 26, 27) directed towards the surface to be measured (411, 412) and, in response to radiation impinging onto the surface to be measured (411, 412) emitted from the electromagnetic radiation source(s) (220), receiving detection radiation emitted by the surface to be measured (411, 412), and providing a control unit connected to the at least one detector (120) and the electromagnetic radiation source(s) (220),

**characterized in that** each of the at least one detector (120) as provided comprises a plurality of pixels (Pi,j, 200, 201, 211, 212), **in that** the method defines at least two measurement positions (400; 401, 402, 403, 404) in which a detector (120) receives radiation from the surface to be measured (411, 412) after emission of radiation by the electromagnetic radiation source(s) (220), **in that** the control unit synchronizes the radiation signals (41) received from the at least two measurement positions for a predetermined pixel (441, 442) of the detector for each of the at least two measurement positions by applying a time shift (40') based on the starting time (42') of the detected radiation signals vis-à-vis emission of radiation by the electromagnetic radiation source (220) to a common point in time (46'),
and in particular wherein

either detectors (120) are provided at all of the measurement positions (401, 402, 403, 404) around surface(s) (411, 412) of the object (10M) to be measured for a reception of radiation signals (41) in one single positioning step
or one or more detectors (120) are provided at one or more but not at all of the measurement positions (400) around the object (10M') to be measured and wherein the method displaces the object (10M, 10M') to be measured vis-à-vis the detectors (10M) or vice versa in one or more positioning steps to receive radiation signals (41) from the detector(s) sequentially at each of the positioning steps,
wherein the radiation signals (41) are transmitted to the control unit together with time information from the electromagnetic radiation source(s) (220) related to the emission of radiation in each of the positioning steps.

16. **The** method of claim 15, wherein the control unit synchronizes radiation signals (41) received from the plurality of pixels ($P_{ij}$) of each of the detectors (120) by applying a time shift (40) based on the starting time (42) of the detected radiation signals (41) to a common point in time (46), especially vis-à-vis the predetermined pixel (441 or 442).

17. A device for the contactless and non-destructive measurement of a surface (17) by measuring its infrared radiation thereof, comprising: one or more electromagnetic radiation sources (220) each adapted to emit excitation radiation in an excitation beam along an associated radiation axis which can be directed onto the surface to be measured, one or more detectors (120) at one or more respective measurement positions (400; 401, 402, 403, 404) arranged on a detection axis (25, 26, 27) directed towards the surface to be measured (411, 412) and, in response to radiation impinging onto the surface to be measured (411, 412) emitted from the electromagnetic radiation source(s) (220), receiving detection radiation emitted by the surface to be measured (411, 412), and a control unit connected to the detectors (120) and the electromagnetic radiation sources (220), wherein each of the at least one detector (120) comprises a plurality of pixels (Pi,j, 200, 201, 211, 212),

**characterized in that** the control unit is configured to position the at least one detector (120) in at least two measurement positions (400; 401, 402, 403, 404) in which a detector (120) is positioned to receive radiation from the surface to be measured (411, 412) after emission of radiation by the electromagnetic radiation source(s) (220), **in that** the control unit is configured to synchronize the radiation signals (41) received from the at least two measurement positions for a predetermined pixel (441, 442) of the detector for each of the at least two measurement positions by applying a time shift (40') based on the starting time (42') of the detected radiation signals vis-à-vis emission of radiation by the electromagnetic radiation source (220) to a common point in time (46').

18. A device for the contactless and non-destructive measurement of a surface (17) by measuring its infrared radiation thereof according to the preamble of claim 17 or according to claim 17, **characterized in that** the control unit is configured to synchronize, for each of the detectors (120) separately, radiation signals (41) received from the plurality of pixels ($P_{ij}$) of this detector (120) by applying a time shift (40) based on the starting time (42) of the detected radiation signals (41) to a common point in time (46) for all pixels ($P_{ij}$), especially vis-à-vis the predetermined pixel (441 or 442).

19. The device of any of the claims 17 or 18, wherein a plurality of detectors (120) and/or electromagnetic radiation sources (220) are positioned at a predetermined distance at the corners (11), at the edges (12) or over a continuous surface (17) of a coated object along the detection axis.

20. The device of any of the claims 17 to 19, wherein the observation cones of the detector(s) (120) at two adjacent measurement positions (400; 401, 402, 403, 404) are overlapping in an area where a surface to be measured can be positioned
and/or
wherein the radiation sources (220) are located concentrically to the detection axis of an associated detector (120).

21. The device of any of the claims 17 to 20, wherein the device comprises a predetermined number of detectors (120) configured to be positioned around an object (10) to be measured with the observation cones of the detectors (120) oriented in a way that the entire interesting surface of the coated object (10) is in the field of view of at least one of the observation cones,
and in particular wherein the predetermined number of detectors (120) is one or more detectors (20, 21) and the one or more detectors (120) are positioned in a sequence of separate image taking events around the object (10A, 10R) to be measured to cover, after all image taking events, the entire interesting surface of the object (10), and wherein in between two image taking events, one or more detectors (21', 21") are moved (7) and/or rotated in respect to the object (10R) to be measured.

22. **The** device according of 21, wherein the predetermined number of detectors (120) is one or more detectors (20, 21), and wherein in between two image taking events, the object (10A to 10R) is moved and/or rotated to position the object (10R) in respect to the one or more detectors (21") to achieve positioning of the observation cones, that, after all image taking events have taken place, the entire interesting surface of the coated object (10) was at least once in the field of view of at least one of the observation cones.

**FIG. 1**

**FIG. 2**

**FIG. 3**

EP 4 786 920 A1

FIG. 4

FIG. 5

**FIG. 6**

**FIG. 7**

431

441

432

442

46'

47

40'

46'

42'

42'

**FIG. 8**

21

10M

401

412

402

411

17

105

412

403

404

**FIG. 9**

400

10M'

420

**FIG. 10**

FIG. 11

FIG. 12

```
          ┌─────────────────────────────┐
          │  Emitting radiation pulse at the │
          │        radiation time            │
          │ S10                              │
          └─────────────────────────────┘
```

Emitting radiation pulse at the radiation time

S10

Read out the values of the pixels for frame k

S14

Transmit the values of frame k to control unit

S16

Determine the times of the values

S18

all frames read?

S12

FIG. 13

Europäisches
Patentamt

European
Patent Office

Office européen
des brevets

# EUROPEAN SEARCH REPORT

**Application Number**

EP 25 20 9965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/050537 A1 (RINGERMACHER HARRY ISRAEL [US] ET AL) 1 March 2012 (2012-03-01) ----- | 1-14 | INV. G01B21/08 G01N21/3563 G01N25/72 |
| X | US 2019/318444 A1 (JUAREZ PETER D [US] ET AL) 17 October 2019 (2019-10-17) * paragraphs [0041] - [0064]; figures 2-4 * ----- | 15 | |

**TECHNICAL FIELDS SEARCHED (IPC)**

G01B
G01N

The present search report has been drawn up for all claims

| Place of search | Date of completion of the search | Examiner |
|---|---|---|
| Munich | 24 June 2026 | Trique, Michael |

EPO FORM 1503 03.82 (P04C01)

## ANNEX TO THE EUROPEAN SEARCH REPORT
## ON EUROPEAN PATENT APPLICATION NO.

EP 25 20 9965

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2026

| Patent document cited in search report | | Publication date | Patent family member(s) | | Publication date |
|---|---|---|---|---|---|
| US 2012050537 | A1 | 01-03-2012 | BR | PI1103714 A2 | 22-01-2013 |
| | | | CN | 102445155 A | 09-05-2012 |
| | | | EP | 2423638 A2 | 29-02-2012 |
| | | | JP | 2012047739 A | 08-03-2012 |
| | | | US | 2012050537 A1 | 01-03-2012 |
| US 2019318444 | A1 | 17-10-2019 | US | 2019318444 A1 | 17-10-2019 |
| | | | US | 2021125302 A1 | 29-04-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060096677 A
- US 20130037720 A
- US 20190318444 A1
- US 20130037720 A1